# EUROPEAN PATENT SPECIFICATION

(11) **EP 4 388 605 B1**
(45) Date of publication and mention of the grant of the patent: **20.08.2025**
(21) Application number: 22768387.7
(22) Date of filing: 22.08.2022
(51) Int. Cl.: H01M 8/1246, H01M 8/2404, H01M 8/2428, H01M 8/2465, H01M 8/12, H01M 4/88

(54) **AN INTEGRATED SINGLE 3D PRINTING SYSTEM-BASED PROCESS FOR MANUFACTURING A MONOLITHIC SOLID OXIDE CELL (SOC) STACK**
EIN INTEGRIERTES AUF EINZEL 3D-DRUCKSYSTEM BASIERTES VERFAHREN ZUR HERSTELLUNG EINES MONOLITHISCHEN FESTOXID-ZELLENSTAPEL
PROCÉDÉ INTÉGRÉ BASÉ SUR UN SYSTÈME INTÉGRÉ D'IMPRESSION 3D INDIVIDUEL POUR LA FABRICATION D'UN EMPILEMENT MONOLITHIQUE DE CELLULES À OXYDE SOLIDE

(30) Priority: 20.08.2021 EP 21382773
(43) Date of publication of application: 26.06.2024
(73) Proprietor: FUNDACIÓ INSTITUT DE RECERCA EN ENERGIA DE CATALUNYA, 08930 Barcelona (ES); Institució Catalana de Recerca I Estudis Avançats, 08010 Barcelona (ES)
(72) Inventor: Tarancón Rubio, Albert, Barcelona (ES); Morata García, Alex, Sant Adrià de Besòs (ES); Torrell Faro, Marc, Barcelona (ES); Pesce, Arianna, Ovada (IT); Hornés Martínez, Aitor, Barcelona (ES); Núñez Eroles, Marc, Andorra la Vella (AD); Kostretsova, Natalia, Barcelona (ES); Alayo Bueno, Nerea, Bilbao (ES)
(74) Representative: Ponti & Partners, S.L.P
(86) International application number: PCT/EP2022/073324
(87) International publication number: WO 2023/021217

(56) References cited:
- EP-A1- 3 754 768
- WO-A1-2020/097118
- J. C. RUIZ-MORALES ET AL: "Three dimensional printing of components and functional devices for energy and environmental applications", ENERGY & ENVIRONMENTAL SCIENCE, vol. 10, no. 4, 28 February 2017 (2017-02-28), Cambridge, pages 846 - 859, XP055444721, ISSN: 1754-5692, DOI: 10.1039/C6EE03526D
- MASCIANDARO S ET AL: "Three-dimensional printed yttria-stabilized zirconia self-supported electrolytes for solid oxide fuel cell applications", JOURNAL OF THE EUROPEAN CERAMIC SOCIETY, vol. 39, no. 1, 15 November 2017 (2017-11-15), pages 9 - 16, XP085513791, ISSN: 0955-2219, DOI: 10.1016/J.JEURCERAMSOC.2017.11.033

## Description

### Field of the invention

The present invention relates to a process of manufacturing a monolithic solid oxide cell (SOC) stack and the solid oxide cell obtained through this process.

### Background of the invention

Conventional fabrication of SOC stacks involve expensive and time-consuming multi-step manufacturing process including: tape casting, screen printing, firing, shaping, and high-temperature thermal treatments. Since current ceramic processing techniques present limitations in terms of shape and design (more than 60 steps), industrially fabricated SOFC cells and stacks are expensive.

US 10,236,528 B2 disclose solid oxide electrochemical devices, methods for making the electrochemical devices, and methods of using the electrochemical devices. In particular, the electrochemical devices comprise a plurality of stacked functional layers that are formed by a combination of three-dimensional (3D) extrusion printing and two-dimensional (2D) casting techniques.

US 6,838,203 B2 discloses a monolithic fuel cell which is made up of fuel passages and oxidizer passages, in the form of a monolithic block. The monolith is made from triplex layers of anode-electrolyte-cathode and a multifunctional substrate that provides interconnects between triplex layers, provides gas diffusion and allows waste products to flow out through it to be extracted.

US 8,268,510 B2 discloses a fuel cell component including a substrate disposed adjacent at least one radiation-cured flow field layer. The flow field layer is one of disposed between the substrate and a diffusion medium layer, and disposed on the diffusion medium layer opposite the substrate. The flow field layer has at least one of a plurality of reactant flow channels and a plurality of coolant channels for the fuel cell. The fuel cell component may be assembled as part of a repeating unit for a fuel cell stack. A method for fabricating the fuel cell component and the associated repeating unit for the fuel cell is also disclosed.

The present inventors have developed an original 3D printing process able to fabricate in a single step customized plug and play SOC stacks. The present process has redefined the fabrication paradigm of SOCs enabling straightforward manufacturing of such devices replacing the traditional multi-step manufacturing processes with an "integrated single step" via printing layer-by-layer consecutive active materials directly stacked one onto the other to generate fuel cells.

The present process makes possible SOC designs with near free-shape, which increases the flexibility of the fabrication process and widens the range of applications due to easy customization of the product even to portable/transportation sector (inaccessible up to now). Additionally, the present process allows the fabrication of joint-less SOCs, removing the weakest point of the current technology, therefore increasing their durability.

Energetically speaking, the present process allows obtaining a cost reduction of more than 60% per kW together with a reduction of the initial required investment in up to one order of magnitude while opens the possibility of manufacturing currently inaccessible complex design solutions: e.g. joint-free stacks (high pressure applications), integration of the fluidics in the electrodes, integration of current collection in the printed design, integration of structural elements to improve the mechanical behavior and thermal behavior and reduction of the thickness of all involved layers (introducing the novel concept of "self-supported stacks"). All these exclusive solutions will clearly improve the performance of the SOC stacks against dramatic failure and long-term degradation.

Furthermore, the present process reduces waste of critical raw materials compared to traditional techniques, prevents the loss of valuable Critical Raw Materials (CRM) with a reduction of up to 80% of advanced ceramics.

Accordingly, the present invention provides a process for manufacturing a monolithic solid oxide cells (SOCs) stack which provides a plurality of advantages which have not disclosed in the current fabrication processes.

WO2020/097118 discloses a 3D printing process for manufacturing a complete monolithic SOFC stack. Said process comprises (a) producing an anode using an additive manufacturing machine; (b) creating an electrolyte using the additive manufacturing machine; and (c) making a cathode using the additive manufacturing machine.

J.C Rui Morales et al. Energy & Environmental Science Vol. 10, no. 4, pages 846-859 disclose different 3D printing systems for manufacturing components and functional devices, such as SOFCs and SOECs.

In contrast to the prior art, the process of the present invention allows to obtain a monolithic solid oxide cell (SOC) stack including the housing. In addition the present invention makes use of a sacrificial material in the process with the corresponding advantages. A further explanation is provided in the Detailed description of the invention.

### Summary of the invention

In a first aspect, the present invention relates to a process of manufacturing a monolithic solid oxide cell (SOC) stack.

In a second aspect, the present invention relates to the solid oxide cell obtained through this process according to the first aspect.

### Brief description of the drawings

Figures show schematically the process of the present invention as set forth in claim 1, i.e.:

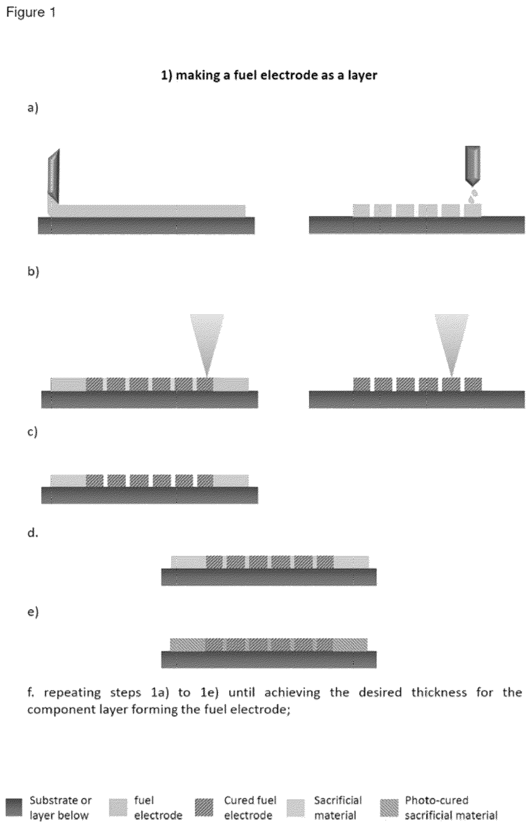

figure 1) making a fuel electrode as a layer;

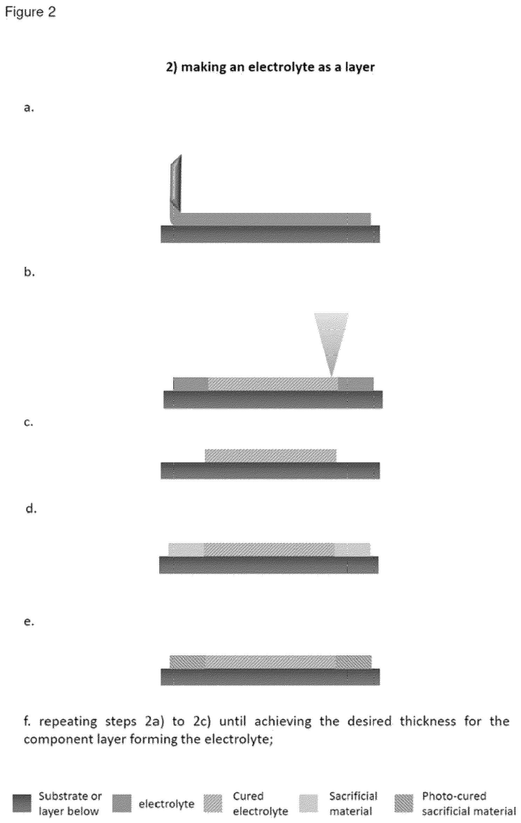

figure 2) making an electrolyte as a layer;

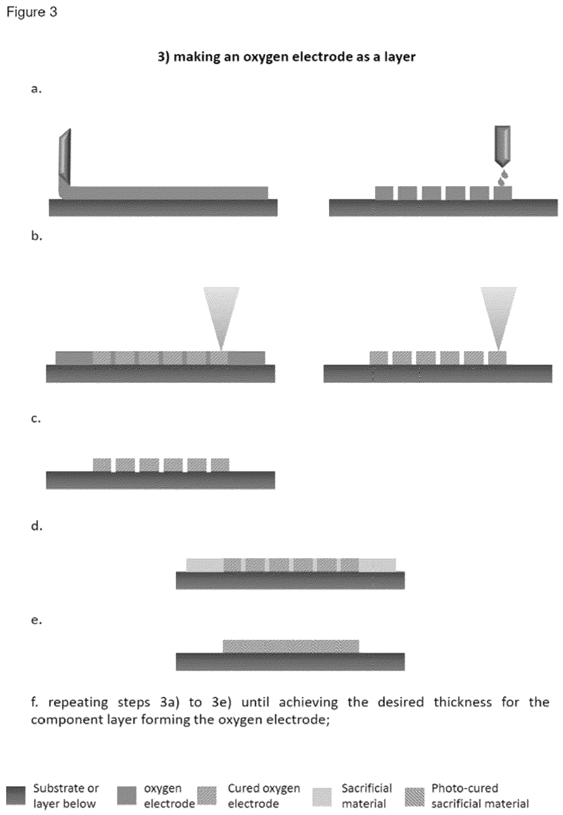

figure 3) making an oxygen electrode as a layer;

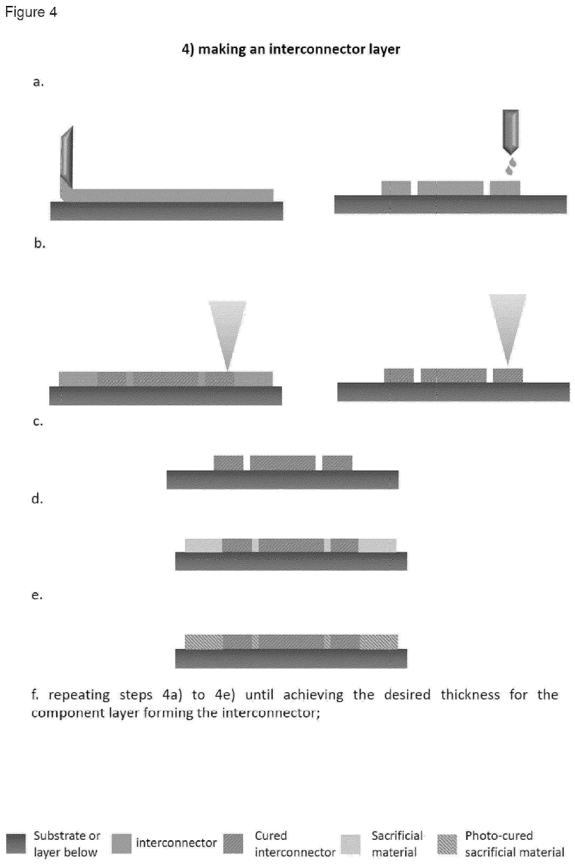

figure 4) making an interconnector layer;

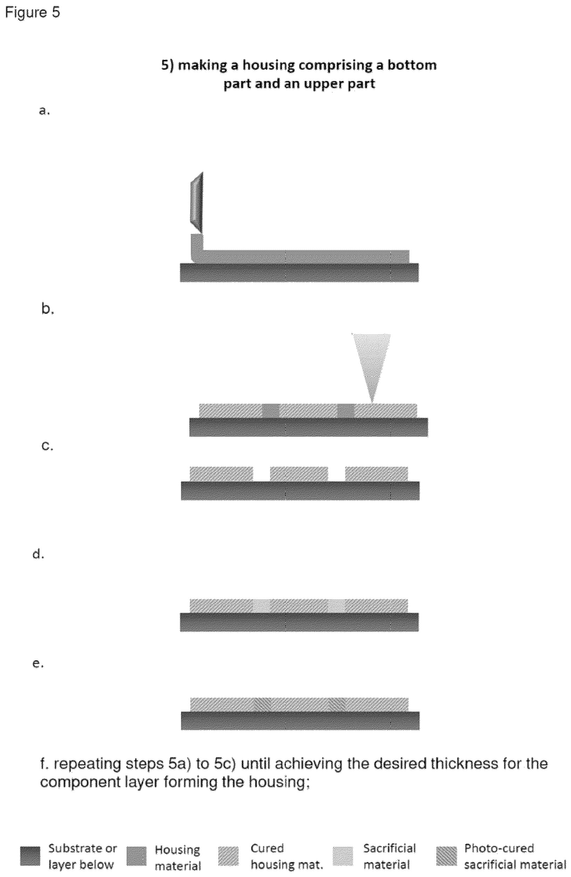

figure 5) making a housing comprising a bottom part and an upper part

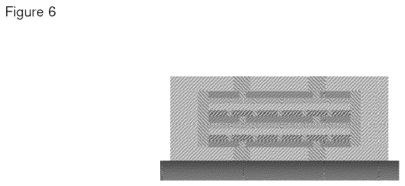

figure 6) final result with completed stack (as a green body).

### Detailed description of the invention

In a first aspect, the present invention relates to an integrated single 3D printing system-based process for manufacturing a monolithic solid oxide cell (SOC) stack, wherein said SOC stack comprises a plurality of individual cells, where each cell includes a fuel electrode, an electrolyte and an oxygen electrode, and has an interconnector layer present between cells, further wherein the SOC stack is surrounded by a housing;
wherein said 3D printing system integrates a stereolithography equipment (SLA) with direct ink-writing (DIW) equipment;
which process comprises **independently** the steps (1, 2, 3, 4, 5) of:
   1) making a fuel electrode as a layer by
      a. depositing a film of 5-500 µm of a ceramic or metal-ceramic (cermet) material over the electrolyte, interconnector or the bottom part of the housing, wherein said deposition is total or partial;
      b. selectively photo-curing the film formed in 1a) with a light source if the deposition was total in step 1a) or photo-curing the film with a light source if the deposition was partial in step 1a);
      c. removing non-cured material from step 1b) if the photo-curing in step 1b) is selective;
      d. adding a sacrificial material in order to fill the channels generated in step 1c;
      e. curing the sacrificial material added in step 1d;
      f. repeating steps 1a) to 1e) until achieving the desired thickness for the component layer forming the fuel electrode;
   2) making an electrolyte as a layer by
      a. depositing a film of 5-500 µm of ceramic material over a lower film which is the oxygen electrode or the fuel electrode, , wherein the ceramic material should have a conductivity higher than 0.1 S/cm² above 600°C, and wherein said deposition is total or partial;
      b. selectively photo-curing the film formed in 2a) with a light source if the deposition was total in step 2a) or photo-curing the film with a light source if the deposition was partial in step 2a);
      c. removing non-cured material from step 2b) if the photo-curing in step 2b) is selective;
      d. adding a sacrificial material in order to fill the channels generated in step 2c;
      e. curing the sacrificial material added in step 2d;
      f. repeating steps 2a) to 2e) until achieving the desired thickness for the component layer forming the electrolyte;
   3) making an oxygen electrode as a layer by
      a. depositing a film of 5-500 µm of a ceramic or metal-ceramic (cermet) material over the electrolyte, interconnector or the bottom part of the housing, wherein said deposition is total or partial;
      b. selectively photo-curing the film formed in 3a) with a light source if the deposition was total in step 3a) or photo-curing the film with a light source if the deposition was partial in step 3a);
      c. removing non-cured material from step 3b) if the photo-curing in step 3b) is selective;
      d. adding a sacrificial material in order to fill the channels generated in step 3c;
      e. curing the sacrificial material added in step 3d;
      f. repeating steps 3a) to 3e) until achieving the desired thickness for the component layer forming the oxygen electrode;
   4) making an interconnector layer by
      a. depositing a film of 5-500 µm of electronically conducting ceramic material or metallic material with a conductivity of 0.3-40 S/cm at a temperature between 600 °C-1000 °C over the corresponding cell; wherein said deposition is total or partial;
      b. selectively photo-curing the film formed in 4a) with a light source if the deposition was total in step 4a) or photo-curing the film with a light source if the deposition was partial in step 4a);
      c. removing non-cured material from step 4b) if the photo-curing in step 4b) is selective;
      d. adding a sacrificial material in order to fill the channels generated in step 4c;
      e. curing the sacrificial material added in step 4d;
      f. repeating steps 4a) to 4e) until achieving the desired thickness for the component layer forming the interconnector;
   5) making a housing comprising a bottom part and an upper part,
      wherein the bottom part and the upper part are made by:
      a. depositing a film of 5-500 µm of electrically isolator ceramic material embedded in polymeric material over the printing system support for the bottom part or over the oxygen electrode or fuel electrode for the upper part; wherein said deposition is total or partial;
      b. selectively photo-curing the film formed in 5a) with a light source; if the deposition was total in step 5a) or photo-curing the film with a light source if the deposition was partial in step 5a);
      c. removing non-cured material from step 5b) if the photo-curing in step 5b) is selective;
      d. adding a sacrificial material in order to fill the channels generated in step 5c;
      e. curing the sacrificial material added in step 5d;
      d. repeating steps 5a) to 5e) until achieving the desired thickness for the component layer forming the housing;
wherein the side part of the housing between the bottom part and the upper part is also made including the corresponding electrical connections and the inlets and outlets for the fuel electrode and oxygen electrode, while making the fuel electrode, oxygen electrode, electrolyte and interconnector according to steps 1) to 4);
and wherein the steps 1) to 5) are carried in an order so that the final structure for the monolithic solid oxide cell (SOC) stack is from bottom to top: housing bottom part- optional interconnector layer - plurality of cells - optional interconnector layer - housing upper part, wherein each cell in the plurality of cells has the following structure from bottom to top: fuel electrode or oxygen electrode - electrolyte - fuel electrode or oxygen electrode; with the interconnector layer present between cells,
and wherein a final thermal treatment of debinding and sintering is applied on the monolithic solid oxide cell (SOC) stack obtained as a green body after steps 1 to 5.

**"Independently"** in the context of the present invention means that steps 1) to 5) do not need to be performed in the logical order 1) to 5), but in a suitable order so that the final structure is as defined in claim 1:
housing bottom part - optional interconnector layer - plurality of cells - optional
interconnector layer - housing upper part,
wherein each cell in the plurality of cells has the following structure from bottom to top: fuel electrode or oxygen electrode - electrolyte - fuel electrode or oxygen electrode;
with the interconnector layer present between cells.

**"Selectively"** in the context of the present invention means exposing particular areas of the film surface in order to create patterns, i.e. channels, inlet, outlet,...

The term "is selective" in steps c) for each of the steps 1) to 5) means that if in step b) the layes was selectively cured, the non-cured part will be removed, whereas if in step b) the layer was totally cured, there will be no non-cured part and obviously there will be no need for removal.

Unless otherwise explained, all technical and scientific terms used herein have the same meaning as commonly understood by one of ordinary skill in the art to which this disclosure belongs. The singular terms "a", "an", "one" and "the" include plural referents unless context clearly indicates otherwise. Similarly, the word "or" is intended to include "and" unless the context clearly indicate otherwise.

In the context of the present invention, "Stereolithography" or SLA relates to the family of additive manufacturing technologies. SLA machines are built around the photopolymerization principle, using a light source, such as laser, to cure liquid or viscous resin into a hardened material. The main difference between types of SLA technologies lies in the end use material, being plastics the most common material up to now. Nevertheless, other materials like ceramics are being in high demand in recent years.

In the context of the present invention, Direct-Ink-Writing (DIW) is an extrusion-based additive manufacturing method. In DIW, the liquid-phase "ink" is dispensed out of small nozzles under controlled flow rates and deposited along defined paths to fabricate 3D structures layer-by-layer.

In the context of the present invention, the use of "sacrificial material" (preferably acrylate base monomers) allows to define, during the printing steps, channels and tracks. The basis of the process is that the parts where this material is deposited will become empty spaces after the thermal treatments steps (debinding and sintering). In this way the printing process is able to generate features, mainly channels and tracks, that will be used for the gas distribution along the different cells at different levels of the stack and also define the distribution of the gas through the whole active area of the printed cells. Due to the use of this approach, it is possible to generate a real monolithic SOC stack able to operate encapsulated in a monolithic structure.

In the context of the present invention, the material suitable to be used as a "fuel electrode" is defined in the following table:

**Table 1. Materials for the Fuel electrode**

| | | |
|---|---|---|
| Type of material | Ceramic or metal-ceramic (cermet) material with electronic or mixed ionic-electronic conduction capabilities. | |
| Unique properties | Ceramic or cermet materials that is: | |
| | | • Stable in reduction conditions |
| | | • Presents thermal expansion coefficient (TEC) close to the one from the electrolyte to avoid mismatch |
| | | • Catalytic properties in H2/H2O conversion |
| | | • Porose microstructure (30-50% porosity) |
| | | • Stable at temperatures > 600ºC |
| List of specific materials (or a combination thereof) | - Nickel-based materials (for example, Ni-O/YSZ (yttria-stabilized zirconia), | |
| | - Ni-O/SSZ (Niquel Oxide Scandia stabilized Zirconia), | |
| | - Ni-O/GDC (gadolinium doped ceria), | |
| | - Ni-O/SDC (samarium doped ceria), | |
| | - Ni-O/YDC (yttrium doped ceria), | |
| | - Lanthanum-based materials: for example, La₁₋ₓSrₓCrO₃ (LSC) La₁₋ₓSrₓCr_{1-y}M_{y}O₃, LST (lanthanum strontium titanate), | |
| | - Cobalt-based materials, | |
| | - Platinum-based materials | |
| | - Other compounds such as CuO₂/CeO₂/YSZ, CuO₂/YSZ, Cu/YZT (titania doped YSZ), CuO₂/CeO₂/SDC (samarium doped ceria), CeO₂/GDC, TiO₂/GDC, Ru/YSZ. | |
| Preferred material | Ni-O/YSZ | |

In the context of the present invention, the material suitable to be used as an "electrolyte" is defined in the following table:

**Table 2. Materials for the Electrolyte**

| | | |
|---|---|---|
| Type of material | | Ceramic material with high ionic conductivity (see below the meaning of high ionic conductivity) |
| Unique properties | Ceramic material: | |
| | | • high ionic conductivity (conductivity > 0.1 S/cm2) at temperatures > 600ºC, |
| | | • Densified material, avoiding connected porosity (H2 gas tight), >96% of theoretical density |
| | | • Stable in reduction/oxidation atmosphere |
| | | • Stable at temperatures > 600ºC |
| List of specific materials (or a combination thereof) | - Zirconia-based materials (for example, YSZ, SSZ, CaSZ (i.e. Y, Sm, Ca-stabilized zirconia), | |
| | - Ceria-based materials (for example, GDC, SDC, YDC, CDC (i.e. Gd, Sm, Y, Ca doped ceria)), | |
| | - Lanthanum-based materials (for example, LSGM (Lanthanum strontium gallium magnesium oxide), | |
| | - LSGMC (Lanthanum strontium gallium magnesium cobalt oxide), | |
| | - LSGMF (Lanthanum strontium gallium magnesium iron oxide), | |
| | - LSGMCF (Lanthanum strontium gallium magnesium cobalt iron oxide), | |
| | - LaAlO₃-based compounds) and other compounds such as BCY (barium cerium yttrium oxide), | |
| | - Bismuth oxide-based compounds, | |
| | - Pyrochlorores-based compounds, and | |
| | - Barium and strontium brownmillerites. | |
| Preferred material | *Yttria-stabilized zirconia* (YSZ) or ceria (CeO₂) | |

In the context of the present invention, the material suitable to be used as an "oxygen electrode" is defined in the following table:

**Table 3. Materials for the Oxygen electrode**

| | | |
|---|---|---|
| Type of material | Ceramic or metal-ceramic (cermet) material with electronic or mixed ionic-electronic conduction capabilities. | |
| Unique properties | Ceramic or cermet materials that is: | |
| | | • Stable in oxidation conditions |
| | | • Presents thermal expansion coefficient (TEC) close to the one from the electrolyte to avoid mismatch |
| | | • Catalytic properties in O₂^{/} O²⁻ conversion |
| | | • Porose microstructure (30-50% porosity) |
| | | • Stable at temperatures > 600ºC |
| List of specific materials (or a combination thereof) | - Lanthanum-based materials (for example, LSM (lanthanum strontium manganite), | |
| | - LSF (lanthanum strontium ferrite), | |
| | - LSC (lanthanum strontium cobaltite), | |
| | - LSCF (lanthanum strontium cobalt ferrite), | |
| | - LSMC (lanthanum strontium cobaltite manganite), | |
| | - LSMCr (lanthanum strontium manganate chromate), | |
| | - LCM (Lanthanum Calcium Manganite), | |
| | - LSCu (Sr-doped lanthanum cuprate), | |
| | - LSFN (Nb-doped lanthanum strontium ferrite), | |
| | - LNF (lanthanum Nickel Iron Oxide), | |
| | - LSCN (lanthanum strontium cobalt nickel oxide), | |
| | - LBC (Cerium-doped lanthanum bromide), | |
| | - LNC (Lanthanum Nickel Cobaltite), | |
| | - LSAF (lanthanum strontium aluminate phosphors), | |
| | - LSCNCu (lanthanum strontium cobalt nickel cuprate), | |
| | - LSFNCu lanthanum strontium iron nickel cuprate), | |
| | - LNO (Lanthanum nickelate)), | |
| | - Gadolinium-based materials (for example, GSC (gadolinium strontium cobaltite), | |
| | - GSM (gadolinium strontium manganite)), | |
| | - Praseodymium-based materials (for example, PCM (praseodymium calcium manganite), | |
| | - PSM (praseodymium strontium manganite), | |
| | - PBC (praseodymium barium cobaltite)), | |
| | - Strontium-based materials (for example, SSC (Samarium Strontium Cobaltite), | |
| | - NSC (neodymium strontium cobaltite), | |
| | - BSCCu (bismuth strontium calcium cuprate)) and | |
| | - Yttria-based materials (for example, YCCF (Yttrium Calcium Cobalt Ferrite) | |
| | - YBCu (yttrium barium cuprate)). | |
| Preferred material | LSM or LSM/YSZ | |

In the context of the present invention, the material suitable to be used as an "interconnector" is defined in the following table:

**Table 4. Materials for the Interconnector**

| | |
|---|---|
| Type of material | Electronically conducting ceramic or metallic material |
| Unique properties | Ceramic or metallic material, preferably being a good electrical conductor (0.3-40 S/cm) at high temperature, preferably between 600 ºC-1000 ºC. |
| List of specific materials (or a combination thereof) | As a Base: |
| | - chromium alloys, |
| | - ferritic stainless steels, |
| | - austenitic stainless steels, |
| | - iron super alloys and |
| | - nickel super alloys |
| | As a Coating: |
| | - LSM, |
| | - LCM, |
| | - LSC, |
| | - LSFeCo (lanthanum strontium iron cobaltite), |
| | - LSCr (lanthanum strontium chromite) |
| | - LaCoO3, and |
| | - Further examples are lanthanum chromitesor lanthanum oxides. |
| Preferred material | Lanthanum oxides. |

In the context of the present invention, the material suitable to be used as a "housing" is defined in the following table:

**Table 5. Materials for the Housing**

| | | |
|---|---|---|
| Type of material | Ceramic material with thermal expansion coefficient close to the one from the electrolyte | |
| Unique properties | | • Presents thermal expansion coefficient (TEC) close to the one from the electrolyte to avoid mismatch |
| | | • Electrically isolator material |
| | | • Densified material, avoiding connected porosity (H2 gas tight), >96% of theoretical density |
| List of specific materials (or a combination thereof) | - *Yttria-stabilized zirconia* (YSZ), | |
| | - Ceria (CeO₂) | |
| | - Alumina (Al₂O₃) | |
| Preferred material | *Yttria-stabilized zirconia* (YSZ) or ceria (CeO₂) | |

It is also noted that when building the bottom part of the housing which is the very first part in the manufacture of a monolithic solid oxide cell (SOC) stack according to the present invention, this is usually deposited over a printing platform.

In addition, it is also noted that the approach of the monolithic structure which embeds the whole SOC stack generates a more isotropic structure, dominated by the employed material (preferably YSZ) that easy the co-sintering process. Moreover the monolithic structure avoids the need of a sealing external material or a process to join the different printed cells. It has to be noted that the monolithic structure allows to generate a self-supported structure that escapes from the classical SOC cells structure where one of the electrodes, or the electrolyte, is the support where the other materials are deposited and mechanically supported. The monolithic external structure is the mechanical support of the structure, and the electrolyte and electrodes can be as thin as the resolution of the printing process allows to, minimizing thereby its resistance contribution.

In a further preferred embodiment, the light source is selected from Laser, LED and UV, preferably Laser.

Depending on the intended use of the solid oxide cell (SOC), this can be implemented as a solid oxide fuel cell (SOFC), a solid oxide electrolyzer cell (SOEC) or a co-solid oxide electrolyzer cell (co-electrolysis by solid oxide electrolysis cells). In the fuel cell mode (SOFC), the SOC generates electricity by electrochemical reaction of a fuel (hydrogen, hydrocarbons, alcohols, etc.) with an oxidant (oxygen in the air). In the electrolysis mode (SOEC), SOC functions as an electrolyzer (in this case, referred to as a solid oxide electrolysis cell or SOEC), producing hydrogen (from water) or chemicals such as syngas (from mixtures of water and carbon dioxide) when coupled with an energy source (fossil, nuclear, renewable). Co-solid oxide fuel cell is a device that can operate efficiently in both fuel cell and electrolysis operating modes.

In a further preferred embodiment, the removal of non-cured material is carried out by laser milling or by a flow of pressurized air.

In a further preferred embodiment, the fuel electrode has an inlet for hydrogen or fuel and an outlet for water.

In another further preferred embodiment, the oxygen electrode has an inlet for hydrogen oxygen or air and an outlet for oxygen or air.

Once the process according to steps 1 to 5 is completed, the resulting monolithic solid oxide cell (SOC) stack (as a green body) is usually subjected to a thermal treatment including two different steps. The treatment called "debinding" allows to remove the organic components of the green body by combustion and the "sintering" is a step in which the ceramic particles generate the final ceramic body.

The "debinding" treatment is carried out at a temperature between 400 and 900 °C and the sintering step for compacting the ceramic material is carried out at a temperature between 1200 and 1700 °C.

In a second aspect, the present invention relates to the solid oxide cell obtained through this process according to the first aspect.

It is noted that any of the embodiments disclosed herein for the compound or the composition can be taken alone or combined with any other embodiment disclosed herein unless the context specifies otherwise. In other words, for example, a preferred option of a defined feature can be combined with a more or less preferred option of another feature.

Described below are examples by way of illustration of the invention without limiting thereof in anyway.

### Example of manufacturing a monolithic solid oxide cell (SOC) stack according to the invention

The following steps were carried out:
Step 1. Deposition of a 25 µm yttria-stabilized zirconia (YSZ) layer over the printing platform for the bottom part to create the base of the housing. Selectively photo-cure the first layer with laser to create the outlet and inlet. Non-cured material is removed. Created channels are filled with sacrificial material and this is cured. Step 1 is repeated several times to obtain a 1 mm thick YSZ layer.
Step 2. Selectively deposit a lanthanum oxide layer on top of the previous YSZ layer with a thickness of 100 µm. This layer will be used as interconnector. The layer is cured with laser. Deposition-curing step is repeated as many times as necessary to obtain a 1 mm thick interconnector layer. At the same time, the lateral walls of the housing are deposited (YSZ layer) and cured.
Step 3. Fuel electrode: partially deposit a film of 50 µm of NiO-YSZ over the interconnector. Photo-cure the film with laser. Sacrificial material is added in order to fill the generated channels and cure. This step will be repeated as many times as necessary to achieve a 1 mm layer. At the same time, the lateral walls of the housing are deposited (YSZ layer) and cured.
Step 4. Electrolyte: 100 µm of yttria-stabilized zirconia (YSZ) layer is deposited over the fuel electrode. Selectively cure the layer with laser. Remove non cured material. Add sacrificial material to fill the gaps or channels. Repeat this step until 500 µm layer is achieved. At the same time, the lateral walls of the housing are deposited (YSZ layer) and cured.
Step 5. Oxygen electrode: partially deposit a film of 100 µm of lanthanum strontium manganite (LSM-YSZ) over the interconnector. Photo-cure the film with laser. Sacrificial material is added in order to fill the generated channels and cure. This step will be repeated as many times as necessary to achieve a 1 mm layer. At the same time, the lateral walls of the housing are deposited (YSZ) and cured.

Steps 2-6 are repeated ten times in order to generate a 10 cells stack.

On top of the last cell an interconnector layer is deposited (Step 2).

Finally, the top cover of the housing is fabricated. A film of 25 µm of yttria-stabilized zirconia (YSZ) is deposited over the last interconnector layer. Selectively photo-cure the first layer with laser to create the outlet and inlet. Non-cured material is removed. This step is repeated several times to obtain a 1 cm thick YSZ layer.

## Claims

1. An integrated single 3D printing system-based process for manufacturing a monolithic solid oxide cell (SOC) stack, wherein said SOC stack comprises a plurality of individual cells, where each cell includes a fuel electrode, an electrolyte and an oxygen electrode, and has an interconnector layer present between cells, further wherein the SOC stack is surrounded by a housing;
wherein said 3D printing system integrates a stereolithography equipment (SLA) with direct ink-writing (DIW) equipment;
which process comprises **independently** the steps (1, 2, 3, 4, 5) of:
1) making a fuel electrode as a layer by
a. depositing a film of 5-500 µm of a ceramic or metal-ceramic (cermet) material over the electrolyte, interconnector or the bottom part of the housing, wherein said deposition is total or partial;
b. selectively photo-curing the film formed in 1a) with a light source if the deposition was total in step 1a) or photo-curing the film with a light source if the deposition was partial in step 1a);
c. removing non-cured material from step 1b) if the photo-curing in step 1b) is selective;
d. adding a sacrificial material in order to fill the channels generated in step 1c;
e. curing the sacrificial material added in step 1d;
f. repeating steps 1a) to 1e) until achieving the desired thickness for the component layer forming the fuel electrode;
2) making an electrolyte as a layer by
a. depositing a film of 5-500 µm of ceramic material over a lower film which is the oxygen electrode or the fuel electrode, wherein the ceramic material should have a conductivity higher than 0.1 S/cm² above 600 °C, and wherein said deposition is total or partial;
b. selectively photo-curing the film formed in 2a) with a light source if the deposition was total in step 2a) or photo-curing the film with a light source if the deposition was partial in step 2a);
c. removing non-cured material from step 2b) if the photo-curing in step 2b) is selective;
d. adding a sacrificial material in order to fill the channels generated in step 2c;
e. curing the sacrificial material added in step 2d;
f. repeating steps 2a) to 2e) until achieving the desired thickness for the component layer forming the electrolyte;
3) making an oxygen electrode as a layer by
a. depositing a film of 5-500 µm of a ceramic or metal-ceramic (cermet) material over the electrolyte, interconnector or the bottom part of the housing, wherein said deposition is total or partial;
b. selectively photo-curing the film formed in 3a) with a light source if the deposition was total in step 3a) or photo-curing the film with a light source if the deposition was partial in step 3a);
c. removing non-cured material from step 3b) if the photo-curing in step 3b) is selective;
d. adding a sacrificial material in order to fill the channels generated in step 3c;
e. curing the sacrificial material added in step 3d;
f. repeating steps 3a) to 3e) until achieving the desired thickness for the component layer forming the oxygen electrode;
4) making an interconnector layer by
a. depositing a film of 5-500 µm of electronically conducting ceramic material or metallic material with a conductivity of 0.3-40 S/cm at a temperature between 600 °C-1000 °C over the corresponding cell; wherein said deposition is total or partial;
b. selectively photo-curing the film formed in 4a) with a light source if the deposition was total in step 4a) or photo-curing the film with a light source if the deposition was partial in step 4a);
c. removing non-cured material from step 4b) if the photo-curing in step 4b) is selective;
d. adding a sacrificial material in order to fill the channels generated in step 4c;
e. curing the sacrificial material added in step 4d;
f. repeating steps 4a) to 4e) until achieving the desired thickness for the component layer forming the interconnector;
5) making a housing comprising a bottom part and an upper part,
wherein the bottom part and the upper part are made by:
a. depositing a film of 5-500 µm of electrically isolator ceramic material embedded in polymeric material over the printing system support for the bottom part or over the oxygen electrode or fuel electrode for the upper part; wherein said deposition is total or partial;
b. selectively photo-curing the film formed in 5a) with a light source; if the deposition was total in step 5a) or photo-curing the film with a light source if the deposition was partial in step 5a);
c. removing non-cured material from step 5b) if the photo-curing in step 5b) is selective;
d. adding a sacrificial material in order to fill the channels generated in step 5c;
e. curing the sacrificial material added in step 5d;
d. repeating steps 5a) to 5e) until achieving the desired thickness for the component layer forming the housing;
wherein the side part of the housing between the bottom part and the upper part is also made including the corresponding electrical connections and the inlets and outlets for the fuel electrode and oxygen electrode, while making the fuel electrode, oxygen electrode, electrolyte and interconnector according to steps 1) to 4);
and wherein the steps 1) to 5) are carried in an order so that the final structure for the monolithic solid oxide cell (SOC) stack is from bottom to top: housing bottom part- optional interconnector layer - plurality of cells - optional interconnector layer - housing upper part, wherein each cell in the plurality of cells has the following structure from bottom to top: fuel electrode or oxygen electrode - electrolyte - fuel electrode or oxygen electrode; with the interconnector layer present between cells,
and wherein a final thermal treatment of debinding and sintering is applied on the monolithic solid oxide cell (SOC) stack obtained as a green body after steps 1 to 5.

2. Process according to claim 1, wherein said light source is selected from Laser, LED and UV.

3. Process according to claim 1 or 2, wherein the solid oxide cell (SOC) is a solid oxide fuel cell (SOFC).

4. Process according to claim 1 or 2, wherein the solid oxide cell is a solid oxide electrolyzer cell (SOEC).

5. Process according to claim 1 or 2, wherein the solid oxide cell is a co-solid oxide electrolyzer cell.

6. Process according to any of claims 1 to 5, wherein the fuel electrode is made of a material selected from the list of specific materials in Table 1, i.e.:
- Nickel-based materials,
- Lanthanum-based materials,
- Cobalt-based materials,
- Platinum-based materials,
- Cu/YZT (titania doped YSZ),
- CuO₂/CeO₂/YSZ,
- CuO₂/YSZ,
- CuO₂/CeO₂/SDC (samarium doped ceria),
- CeO₂/GDC (galodinium doped ceria),
- TiO₂/GDC, and
- Ru/YSZ.

7. Process according to any of claims 1 to 6, wherein the electrolyte is made of a material selected from the list of specific materials in Table 2, i.e.:
- Zirconia-based materials;
- Ceria-based materials;
- Lanthanum-based materials;
- Bismuth oxide-based compounds,
- Pyrochlorores-based compounds, and
- Barium and strontium brownmillerites.

8. Process according to any of claims 1 to 7, wherein the oxygen electrode is made of a material selected from the list of specific materials in Table 3, i.e.:
- Lanthanum-based materials,
- Gadolinium-based materials,
- Praseodymium-based materials,
- Strontium-based materials, and
- Yttria-based materials.

9. Process according to any of claims 1 to 8, wherein the interconnector is made of a material selected from the list of specific materials in Table 4, i,e.:
As a Base:
- chromium alloys,
- ferritic stainless steels,
- austenitic stainless steels,
- iron super alloys and
- nickel super alloys
As a Coating:
- LSM (lanthanum strontium manganite),
- LCM (lanthanum Calcium Manganite),
- LSC (lanthanum strontium cobaltite),
- LSFeCo (lanthanum strontium iron cobaltite),
- LSCr (lanthanum strontium chromite)
- LaCoO3, and
- Lanthanum chromitesor lanthanum oxides.

10. Process according to any of claims 1 to 9, wherein the housing is made of a material selected from the list of specific materials in Table 5, i.e.:
- Yttria-stabilized zirconia (YSZ),
- Ceria (CeO₂), and
- Alumina (Al₂O₃).

11. Process according to any of claims 1 to 10, wherein the removal of non-cured material is carried out by laser milling or by a flow of pressurized air.

12. Process according to any of claims 1 to 11, wherein the fuel electrode has an inlet for hydrogen or fuel and an outlet for water.

13. Process according to any of claims 1 to 12, wherein the oxygen electrode has an inlet for hydrogen oxygen or air and an outlet for oxygen or air.

14. A monolithic solid oxide cell (SOC) stack as obtained according to any of claims 1 to 13.

## Patentansprüche

1. Integriertes, auf einem einzelnen 3D-Drucksystem basierendes Verfahren zur Herstellung eines monolithischen Festoxidzellenstapels (SOC), wobei der SOC-Stapel mehrere Einzelzellen umfasst, wobei jede Zelle eine Brennstoffelektrode, einen Elektrolyten und eine Sauerstoffelektrode enthält, und eine Verbindungsschicht zwischen Zellen aufweist, wobei der SOC-Stapel von einem Gehäuse umgeben ist;
wobei im 3D-Drucksystem eine Stereolithografie-Vorrichtung (SLA) mit einer Direkttintenschreibvorrichtung (DIW) integriert ist;
wobei das Verfahren **unabhängig** voneinander die folgenden Schritte (1, 2, 3, 4, 5) umfasst:
1) Herstellen einer Brennstoffelektrode als Schicht durch
a. Abscheiden eines 5-500 µm dicken Films aus einem Keramik- oder Metallkeramikmaterial (Cermet) auf dem Elektrolyten, der Verbindungsschicht oder dem Gehäuseboden, wobei die Abscheidung vollständig oder teilweise erfolgt;
b. selektives Fotohärten des in Schritt 1a) gebildeten Films mit einer Lichtquelle, wenn die Abscheidung in Schritt 1a) vollständig erfolgte, oder Fotohärten des Films mit einer Lichtquelle, wenn die Abscheidung in Schritt 1a) teilweise erfolgte;
c. Entfernen von nicht ausgehärtetem Material aus Schritt 1b), sofern die Fotohärtung in Schritt 1b) selektiv erfolgt;
d. Zusetzen eines Opfermaterials zum Füllen der in Schritt 1c erzeugten Kanäle;
e. Aushärten des in Schritt 1d zugesetzten Opfermaterials;
f. Wiederholen der Schritte 1a) bis 1e) bis die gewünschte Dicke der die Brennstoffelektrode bildenden Komponentenschicht erreicht ist;
2) Herstellen eines Elektrolyten als Schicht durch
a. Abscheiden eines 5-500 µm dicken Films aus Keramikmaterial auf einem unteren Film, der die Sauerstoffelektrode oder die Brennstoffelektrode darstellt, wobei das Keramikmaterial oberhalb von 600 °C eine Leitfähigkeit von mehr als 0,1 S/cm aufweisen sollte und wobei die Abscheidung vollständig oder teilweise erfolgt;
b. selektives Fotohärten des in Schritt 2a) gebildeten Films mit einer Lichtquelle, wenn die Abscheidung in Schritt 2a) vollständig erfolgte, oder Fotohärten des Films mit einer Lichtquelle, wenn die Abscheidung in Schritt 2a) partiell erfolgte;
c. Entfernen von nicht ausgehärtete, Material aus Schritt 2b), wenn die Fotohärtung in Schritt 2b) selektiv erfolgt;
d. Zusetzen eines Opfermaterials zum Füllen der in Schritt 2c erzeugten Kanäle;
e. Aushärten des in Schritt 2d zugesetzten Opfermaterials;
f. Wiederholen der Schritte 2a) bis 2e) bis die gewünschte Dicke der den Elektrolyten bildenden Komponentenschicht erreicht ist;
3) Herstellen einer Sauerstoffelektrode als Schicht durch
a. Abscheiden eines 5-500 µm dicken Films aus Keramik- oder Metallkeramikmaterial (Cermet) auf dem Elektrolyten, der Verbindungsschicht oder dem Gehäuseboden, wobei die Abscheidung vollständig oder teilweise erfolgt;
b. selektives Fotohärten des in Schritt 3a) gebildeten Films mit einer Lichtquelle, wenn die Abscheidung in Schritt 3a) vollständig erfolgte, oder Fotohärten des Films mit einer Lichtquelle, wenn die Abscheidung in Schritt 3a) partiell erfolgte;
c. Entfernen von nicht ausgehärtetem Material aus Schritt 3b), wenn die Fotohärtung in Schritt 3b) selektiv erfolgt;
d. Zusetzen eines Opfermaterials zum Füllen der in Schritt 3c erzeugten Kanäle;
e. Aushärten des in Schritt 3d zugesetzten Opfermaterials;
f. Wiederholen der Schritte 3a) bis 3e), bis die gewünschte Schichtdicke der die Sauerstoffelektrode bildenden Komponentenschicht erreicht ist;
4) Herstellen einer Verbindungsschicht durch
a. Abscheiden eines 5-500 µm dicken Films aus elektronisch leitendem Keramikmaterial oder Metallmaterial mit einer Leitfähigkeit von 0,3-40 S/cm bei einer Temperatur von 600 °C bis 1000 °C auf der entsprechenden Zelle, wobei die Abscheidung vollständig oder teilweise erfolgt;
b. selektives Fotohärten des in Schritt 4a) gebildeten Films mit einer Lichtquelle, wenn die Abscheidung in Schritt 4a) vollständig erfolgte, oder Fotohärten des Films mit einer Lichtquelle, wenn die Abscheidung in Schritt 4a) partiell erfolgte;
c. Entfernen von nicht ausgehärtetem Material aus Schritt 4b), wenn die Fotohärtung in Schritt 4b) selektiv erfolgt;
d. Zusetzen eines Opfermaterials zum Füllen der in Schritt 4c erzeugten Kanäle;
e. Aushärten des in Schritt 4d zugesetzten Opfermaterials;
f. Wiederholen der Schritte 4a) bis 4e), bis die gewünschte Dicke der die Verbindungsschicht bildenden Komponentenschicht erreicht ist;
5) Herstellen eines Gehäuses umfassend ein Unterteil und ein Oberteil,
wobei das Unterteil und das Oberteil hergestellt werden durch:
a. Abscheiden einer 5-500 µm dicken Schicht aus elektrisch isolierendem in Polymermaterial eingebettetem Keramikmaterial auf dem Drucksystemträger für das Unterteil oder auf der Sauerstoffelektrode oder Brennstoffelektrode für das Oberteil; wobei die Abscheidung vollständig oder teilweise erfolgt;
b. selektives Fotohärten des in Schritt 5a) gebildeten Films mit einer Lichtquelle, wenn die Abscheidung in Schritt 5a) vollständig erfolgte, oder Fotohärten des Films mit einer Lichtquelle, wenn die Abscheidung in Schritt 5a) partiell erfolgte;
c. Entfernen von nicht ausgehärtetem Material aus Schritt 5b), wenn die Aushärtung in Schritt 5b) selektiv erfolgt;
d. Zusetzen eines Opfermaterials zum Füllen der in Schritt 5c erzeugten Kanäle;
e. Aushärten des in Schritt 5d zugesetzten Opfermaterials;
d. Wiederholen der Schritte 5a) bis 5e) bis die gewünschte Dicke der das Gehäuse bildenden Komponentenschicht erreicht ist;
wobei auch das Seitenteil des Gehäuses zwischen dem Unterteil und dem Oberteil einschließlich der entsprechenden elektrischen Anschlüsse sowie der Einlässe und Auslässe für die Brennstoffelektrode und Sauerstoffelektrode hergestellt wird, während die Brennstoffelektrode, Sauerstoffelektrode, Elektrolyt und Verbindungsschicht gemäß den Schritten 1) bis 4) hergestellt werden;
und wobei die Schritte 1) bis 5) in einer solchen Reihenfolge ausgeführt werden, dass die endgültige Struktur für den monolithischen Festoxidzellenstapel (SOC) von unten nach oben lautet: Gehäuseunterteil - optionale Verbindungsschicht - mehrere Zellen - optionale Verbindungsschicht - Gehäuseoberteil, wobei jede Zelle der mehreren Zellen von unten nach oben die folgende Struktur aufweist: Brennstoffelektrode oder Sauerstoffelektrode - Elektrolyt - Brennstoffelektrode oder Sauerstoffelektrode; mit der Verbindungsschicht zwischen den Zellen,
und wobei eine abschließende thermische Behandlung zum Entbinden und Sintern auf die monolithische Festoxid-Zelle (SOC) angewendet wird, die nach den Schritten 1 bis 5 als Grünkörper erhalten wurde.

2. Verfahren nach Anspruch 1, wobei die Lichtquelle aus Laser, LED oder UV ausgewählt wird.

3. Verfahren nach Anspruch 1 oder 2, wobei die Festoxidzelle (SOC) eine Festoxidbrennstoffzelle (SOFC) ist.

4. Verfahren nach Anspruch 1 oder 2, wobei die Festoxidzelle eine Festoxidelektrolysezelle (SOEC) ist.

5. Verfahren nach Anspruch 1 oder 2, wobei die Festoxidzelle eine Co-Festoxidelektrolysezelle ist.

6. Verfahren nach einem der Ansprüche 1 bis 5, wobei die Brennstoffelektrode aus einem Material gefertigt ist, das aus der Liste spezifischer Materialien in Tabelle 1 ausgewählt ist, d.h.
- Nickel-basierte Materialien,
- Lanthan-basierte Materialien,
- Cobalt-basierte Materialien,
- Platin-basierte Materialien,
- Cu/YZT (mit Titan dotiertes YSZ),
- CuO₂/CeO₂/YSZ
- CuO₂/YSZ,
- CuO₂/CeO₂/SDC (mit Samarium dotiertes Ceroxid),
- CuO₂/GDC (mit Gadolinium dotiertes Ceroxid),
- TiO₂/GDC und
- Ru/YSZ.

7. Verfahren nach einem der Ansprüche 1 bis 6, wobei der Elektrolyt aus einem Material gefertigt ist, das aus der Liste spezifischer Materialien in Tabelle 2 ausgewählt ist, d.h.
- Zirkonoxid-basierte Materialien,
- Ceroxid-basierte Materialien,
- Lanthan-basierte Materialien,
- Bismutoxid-basierte Materialien,
- Pyrochlor-basierte Materialien, und
- Barium- und Strontiumbrownmilleriten.

8. Verfahren nach einem der Ansprüche 1 bis 7, wobei die Sauerstoffelektrode, aus einem Material gefertigt ist, das aus der Liste spezifischer Materialien in Tabelle 3 ausgewählt ist, d.h.
- Lanthan-basierte Materialien,
- Gadolinium-basierte Materialien,
- Praseodym-basierte Materialien,
- Strontium-basierte Materialien und
- Yttrium-basierte Materialien.

9. Verfahren nach einem der Ansprüche 1 bis 8, wobei die Verbindungsschicht aus einem Material gefertigt ist, das aus der Liste spezifischer Materialien in Tabelle 4 ausgewählt ist, d.h.
als Basis:
- Chromlegierungen,
- ferritische nichtrostende Stähle,
- austenitische nichtrostende Stähle,
- Eisen-Superlegierungen und
- Nickel-Superlegierungen
als Beschichtung:
- LSM (Lanthanstrontiummanganit),
- LCM (Lanthancalciummanganit),
- LSC (Lanthanstrontiumcobaltit),
- LSFeCo (Lanthanstrontiumeisencobaltit),
- LSCr (Lanthanstrontiumchromit),
- LaCoO₃ und
- Lanthanchromite oder Lanthanoxide.

10. Verfahren nach einem der Ansprüche 1 bis 9, wobei das Gehäuse aus einem Material gefertigt ist, das aus der Liste spezifischer Materialien in Tabelle 5 ausgewählt ist, d.h.
- Yttriumoxid-stabilisiertes Zirkonoxid (YSZ),
- Ceroxid (CeO₂) und
- Aluminiumoxid (Al₂O₃)_{·}

11. Verfahren nach einem der Ansprüche 1 bis 10, wobei das Entfernen von nicht ausgehärtetem Material durch Laserfräsen oder durch einen Druckluftstrom erfolgt.

12. Verfahren nach einem der Ansprüche 1 bis 11, wobei die Brennstoffelektrode einen Einlass für Wasserstoff oder Brennstoff und einen Auslass für Wasser aufweist.

13. Verfahren nach einem der Ansprüche 1 bis 12, wobei die Sauerstoffelektrode einen Einlass für Wasserstoff, Sauerstoff oder Luft und einen Auslass für Sauerstoff oder Luft aufweist.

14. Monolithischer Festoxidzellenstapel (SOC), erhalten nach einem der Ansprüche 1 bis 13.

## Revendications

1. Procédé basé sur un système d'impression 3D unique intégré pour fabriquer un empilement de piles à oxyde solide (SOC) monolithiques, dans lequel ledit empilement de SOC comprend une pluralité de pile individuelles, dans lequel chaque pile inclut une électrode à combustible, un électrolyte et une électrode à oxygène, et présente une couche d'interconnecteur présente entre les piles, dans lequel en outre l'empilement de SOC est entouré d'un boîtier ;
dans lequel ledit système d'impression 3D intègre un équipement de stéréolithographie (SLA) avec un équipement d'écriture directe à l'encre (DIW) ;
lequel procédé comprend **indépendamment** les étapes (1, 2, 3, 4, 5) consistant à :
1) fabriquer une électrode à combustible sous la forme d'une couche par
a. dépôt d'un film de 5 à 500 µm d'un matériau de céramique ou de métal-céramique (cermet) au-dessus de l'électrolyte, l'interconnecteur ou la partie inférieure du boîtier, dans lequel ledit dépôt est total ou partiel ;
b. photodurcissement sélectif du film formé en 1a) à l'aide d'une source de lumière si le dépôt était total à l'étape 1a) ou photodurcissement du film à l'aide d'une source de lumière si le dépôt était partiel à l'étape 1a) ;
c. retrait du matériau non durci de l'étape 1b) si le photodurcissement de l'étape 1b) est sélectif ;
d. ajout d'un matériau sacrificiel afin de remplir les canaux générés à l'étape 1c ;
e. durcissement du matériau sacrificiel ajouté à l'étape 1d ;
f. répétition des étapes 1a) à 1e) jusqu'à atteindre l'épaisseur souhaitée pour la couche de composant formant l'électrode à combustible ;
2) fabriquer un électrolyte sous la forme d'une couche par
a. dépôt d'un film de 5 à 500 µm de matériau de céramique au-dessus d'un film inférieur qui est l'électrode à oxygène ou l'électrode à combustible, dans lequel le matériau de céramique doit présenter une conductivité supérieure à 0,1 S/cm2 au-dessus de 600°C, et dans lequel ledit dépôt est total ou partiel ;
b. photodurcissement sélectif du film formé en 2a) à l'aide d'une source de lumière si le dépôt était total à l'étape 2a) ou photodurcissement du film à l'aide d'une source de lumière si le dépôt était partiel à l'étape 2a) ;
c. retrait du matériau non durci de l'étape 2b) si le photodurcissement de l'étape 2b) est sélectif ;
d. ajout d'un matériau sacrificiel afin de remplir les canaux générés à l'étape 2c ;
e. durcissement du matériau sacrificiel ajouté à l'étape 2d ;
f. répétition des étapes 2a) à 2e) jusqu'à atteindre l'épaisseur souhaitée pour la couche de composant formant l'électrolyte ;
3) fabriquer une électrode à oxygène sous la forme d'une couche par
a. dépôt d'un film de 5 à 500 µm d'un matériau de céramique ou de métal-céramique (cermet) au-dessus de l'électrolyte, l'interconnecteur ou la partie inférieure du boîtier, dans lequel ledit dépôt est total ou partiel ;
b. photodurcissement sélectif du film formé en 3a) à l'aide d'une source de lumière si le dépôt était total à l'étape 3a) ou photodurcissement du film à l'aide d'une source de lumière si le dépôt était partiel à l'étape 3a) ;
c. retrait du matériau non durci de l'étape 3b) si le photodurcissement de l'étape 3b) est sélectif ;
d. ajout d'un matériau sacrificiel afin de remplir les canaux générés à l'étape 3c ;
e. durcissement du matériau sacrificiel ajouté à l'étape 3d ;
f. répétition des étapes 3a) à 3e) jusqu'à atteindre l'épaisseur souhaitée pour la couche de composant formant l'électrode à oxygène ;
4) fabriquer une couche d'interconnecteur par
a. dépôt d'un film de 5 à 500 µm de matériau de céramique ou de matériau métallique électroniquement conducteur avec une conductivité de 0,3 à 40 S/cm à une température comprise entre 600°C et 1000°C au-dessus de la cellule correspondante ; dans lequel ledit dépôt est total ou partiel ;
b. photodurcissement sélectif du film formé en 4a) à l'aide d'une source de lumière si le dépôt était total à l'étape 4a) ou photodurcissement du film à l'aide d'une source de lumière si le dépôt était partiel à l'étape 4a) ;
c. retrait du matériau non durci de l'étape 4b) si le photodurcissement de l'étape 4b) est sélectif ;
d. ajout d'un matériau sacrificiel afin de remplir les canaux générés à l'étape 4c ;
e. durcissement du matériau sacrificiel ajouté à l'étape 4d ;
f. répétition des étapes 4a) à 4e) jusqu'à atteindre l'épaisseur souhaitée pour la couche de composant formant l'interconnecteur ;
5) fabriquer un boîtier comprenant une partie inférieure et une partie supérieure, dans lequel la partie inférieure et la partie supérieure sont fabriquées par :
a. dépôt d'un film de 5 à 500 µm de matériau de céramique d'isolateur électrique noyé dans un matériau polymère au-dessus du support de système d'impression pour la partie inférieure ou au-dessus de l'électrode à oxygène ou de l'électrode à combustible pour la partie supérieure ; dans lequel ledit dépôt est total ou partiel ;
b. photodurcissement sélectif du film formé en 5a) à l'aide d'une source de lumière si le dépôt était total à l'étape 5a) ou photodurcissement du film à l'aide d'une source de lumière si le dépôt était partiel à l'étape 5a) ;
c. retrait du matériau non durci de l'étape 5b) si le photodurcissement de l'étape 5b) est sélectif ;
d. ajout d'un matériau sacrificiel afin de remplir les canaux générés à l'étape 5c ;
e. durcissement du matériau sacrificiel ajouté à l'étape 5d ;
f. répétition des étapes 5a) à 5e) jusqu'à atteindre l'épaisseur souhaitée pour la couche de composant formant le boîtier ;
dans lequel la partie latérale du boîtier entre la partie inférieure et la partie supérieure est également fabriquée, y compris les connexions électriques correspondantes et les entrées et sorties pour l'électrode à combustible et l'électrode à oxygène, tout en fabriquant l'électrode à combustible, l'électrode à oxygène, l'électrolyte et l'interconnecteur selon les étapes 1) à 4) ;
et dans lequel les étapes 1) à 5) sont effectuées dans un ordre tel que la structure finale de l'empilement de piles à oxyde solide (SOC) monolithiques est de bas en haut : partie inférieure de boîtier - couche d'interconnecteur facultative - pluralité de piles - couche d'interconnecteur facultative - partie supérieure de boîtier, dans lequel chaque pile de la pluralité de piles présente la structure suivante de bas en haut : électrode à combustible ou électrode à oxygène - électrolyte - électrode à combustible ou électrode à oxygène ; avec la couche d'interconnecteur présente entre les piles,
et dans lequel un traitement thermique final de déliantage et de frittage est appliqué sur l'empilement de piles à oxyde solide (SOC) monolithiques obtenu sous la forme d'un corps vert après les étapes 1 à 5.

2. Procédé selon la revendication 1, dans lequel ladite source de lumière est sélectionnée parmi Laser, DEL et UV.

3. Procédé selon la revendication 1 ou 2, dans lequel la pile à oxyde solide (SOC) est une pile à combustible à oxyde solide (SOFC).

4. Procédé selon la revendication 1 ou 2, dans lequel la pile à oxyde solide est une pile d'électrolyse à oxyde solide (SOEC).

5. Procédé selon la revendication 1 ou 2, dans lequel la pile d'oxyde solide est une pile d'électrolyse à oxyde co-solide.

6. Procédé selon l'une quelconque des revendications 1 à 5, dans lequel l'électrode à combustible est constituée d'un matériau sélectionné dans la liste des matériaux spécifiques du Tableau 1, à savoir :
- matériaux à base de nickel,
- matériaux à base de lanthane,
- matériaux à base de cobalt,
- matériaux à base de platine,
- Cu/YZT (YSZ dopé à l'oxyde de titane),
- CuO₂/CeO₂/YSZ,
- CuO₂/YSZ,
- CuO₂/CeO₂/SDC (oxyde de cérium dopé au samarium),
- CeO₂/GDC (oxyde de cérium dopé au galodinium),

7. Procédé selon l'une quelconque des revendications 1 à 6, dans lequel l'électrolyte est constitué d'un matériau choisi dans la liste de matériaux spécifiques du Tableau 2, à savoir :
- matériaux à base de zircone ;
- matériau à base d'oxyde de cérium ;
- matériau à base de lanthane ;
- composés à base d'oxyde de bismuth,
- composés à base de pyrochlorures, et
- brownmillerites de baryum et de strontium.

8. Procédé selon l'une quelconque des revendications 1 à 7, dans lequel l'électrode à oxygène est constituée d'un matériau choisi dans la liste de matériaux spécifiques du Tableau 3, à savoir :
- matériaux à base de lanthane,
- matériaux à base de gadolinium,
- matériaux à base de praséodyme,
- matériaux à base de strontium, et
- matériaux à base d'oxyde d'yttrium.

9. Procédé selon l'une quelconque des revendications 1 à 8, dans lequel l'interconnecteur est constitué d'un matériau sélectionné dans la liste de matériaux spécifiques du Tableau 4, à savoir :
En tant que base :
- alliages de chrome,
- aciers inoxydables ferritiques,
- aciers inoxydables austénitiques,
- superalliages de fer et
- superalliages de nickel
En tant que revêtement :
- LSM (manganite de lanthane-strontium),
- LCM (manganite de lanthane-calcium),
- LSC (cobaltite de lanthane-strontium),
- LSFeCo (cobaltite de fer-lanthane-strontium),
- LSCr (chromite de lanthane-strontium)
- LaCoO3, et
- chromites de lanthane ou oxydes de lanthane.

10. Procédé selon l'une quelconque des revendications 1 à 9, dans lequel le boîtier est réalisé en un matériau choisi dans la liste de matériaux spécifiques du Tableau 5, à savoir :
- Zircone stabilisée à l'oxyde d'yttrium (YSZ),
- Oxyde de cérium (CeO₂), et
- Alumine (Al₂O₃) .

11. Procédé selon l'une quelconque des revendications 1 à 10, dans lequel l'élimination du matériau non durci est effectuée par fraisage laser ou par un écoulement d'air sous pression.

12. Procédé selon l'une quelconque des revendications 1 à 11, dans lequel l'électrode à combustible présente une entrée pour l'hydrogène ou le combustible et une sortie pour l'eau.

13. Procédé selon l'une quelconque des revendications 1 à 12, dans lequel l'électrode à oxygène présente une entrée pour l'hydrogène, l'oxygène ou l'air, et une sortie pour l'oxygène ou l'air.

14. Empilement de piles à oxyde solide (SOC) monolithiques tel qu'obtenu selon l'une quelconque des revendications 1 à 13.
